# EUROPÄISCHE PATENTSCHRIFT

(11) **EP 2 072 276 B1**
(45) Veröffentlichungstag und Bekanntmachung des Hinweises auf die Patenterteilung: **23.11.2016**
(21) Anmeldenummer: 08021789.6
(22) Anmeldetag: 16.12.2008
(51) Int. Cl.: B42C 19/08, B65G 47/90, B65H 31/30

(54) **Vorrichtung zum Bewegen eines Druckproduktes**
Device for moving a printed product
Dispositif destiné à déplacer un produit d'impression

(30) Priorität: 22.12.2007 DE 102007062607
(43) Veröffentlichungstag der Anmeldung: 24.06.2009
(73) Patentinhaber: Kolbus GmbH & Co. KG, 32369 Rahden (DE)
(72) Erfinder: Meineke, Torsten, 27211 Bassum (DE); Brommer, Carsten, 49545 Tecklenburg/Leeden (DE)

(56) Entgegenhaltungen:
- EP-A1- 1 674 285
- EP-A2- 1 344 655
- EP-B1- 0 790 139
- DE-A1- 3 413 222
- DE-A1- 10 246 077
- DE-A1- 10 340 532
- DE-A1-102004 006 128
- US-A- 3 063 575

## Beschreibung

Die Erfindung betrifft eine Vorrichtung zum Bewegen eines Buches, eines gebundenen oder aus Bogen und/oder Falzbogen lose zusammengetragenen Buchblocks oder Druckprodukts gemäß dem Oberbegriff des Patentanspruchs 1.

Vorrichtungen der genannten Art, bei denen das Druckprodukt zwischen Klemmbacken fixiert ist, werden eingesetzt, um das Druckprodukt einer Bearbeitungsstation zuzuführen oder von dieser zur nächsten Bearbeitungsstation weiterzubewegen oder aus der Bearbeitungsstation auszulegen, ohne dass sich die einzelnen Bestandteile des Druckprodukts, bspw. die Bogen und/oder Falzbogen eines ungebundenen Buchblocks, relativ zueinander verschieben und dadurch ihre Ausrichtung zueinander verlieren. Auch bei einem frisch gebundenen Druckprodukt, bspw. einem frisch eingehängten und/oder falzeingebrannten Buch, ist eine gegriffene Auslage qualitätsfördernd.

Aus der EP 790 139 B1 ist eine Zuführeinrichtung für einen Klebebinder bekannt, die einen um eine Drehachse hin und her schwenkbaren Greifer aufweist zur Überführung eines ungebundenen Buchblocks aus einer flachliegenden Übernahmeposition in eine stehende Position oberhalb einer den Buchblock nachfolgend übernehmenden Blockklammer des Klebebinders. Das Öffnen und Schließen des Greifers erfolgt mit einem Zahnstangengetriebe, das von einem auf dem Greifer angeordneten Antrieb drehangetrieben ist und mit dem die zugeordnete Klemmbacke zur anderen feststehenden Klemmbacke parallelverschiebbar ist.

In der DE 103 40 532 A1 ist eine Vorrichtung zum Fixieren von Stapeln blattförmiger Bedruckstoffe vorgestellt, welche den Stapel beidseitig mit Klemmbacken greift und um eine Rotationsachse dreht. Die Klemmbacken sind derart angelenkt, dass im gegriffenen Zustand der Stapel immer mittig zur Stapelhöhe ausgerichtet ist. Die Klemmbacken werden durch Zugfedern offen gehalten und durch jeweils einen auf dem Abtrieb eines gemeinsamen Motors sitzenden Exzentern mittels einer Schere geschlossen. Die Klemmbacken und deren Antrieb sind ein einem gemeinsamen Rahmen gelagert, welcher um die Rotationsachse drehbar ausgeführt ist.

In der DE 10 2004 006 128 A1 ist eine Dreheinrichtung dargestellt und beschrieben, mit der stehend zugeführte Bücher taktgemäß erfasst, quer zur Zuführförderrichtung herausgeschwenkt und in eine definierte, zum Zuführtransportpfad beabstandete, flachliegende Auflageposition überführt werden. Die Dreheinrichtung umfasst vier gemeinsam intermittierend umlaufende Greifer, die die Bücher nacheinander übernehmen und nach jeweils drei 90° Schwenkschritten abgeben, um mit dem vierten Schwenkschritt in die Übernahmeposition zurückzukehren. Der Aufbau der Greifer ist derart, dass eine innere Klemmplatte auf die Formatdicke einstellbar und eine äußere Klemmplatte zum Einspannen der Bücher von einem Pneumatikzylinder betätigbar ausgeführt sind.

Nachteilig an den bekannten Vorrichtungen ist, dass die Antriebsmittel zum öffnen und Schließen mitbewegt werden. Dadurch wird das zu bewegende Gewicht vergrößert und die Anschlussleitungen unterliegen einer ständigen, mechanischen Belastung. Bei umlaufenden Vorrichtungen, wie der aus der DE 10 2004 006 128 A1, ist eine aufwändige Drehdurchführung für die Anschlussleitungen erforderlich.

Aus der DE 102 46 077 A1 ist eine Klemmeinrichtung bekannt, die um eine Mittellinie eines darin aufgenommenen Blattstapels um plus 90° oder minus 90° rotierbar ist. Die Klemmbacken werden symmetrisch zu einer Mittenebene geöffnet und geschlossen, wobei die Klemmbacken unter Abfederung an Druckleisten aufgenommen sind, die in eine Schließ- und eine Öffnestellung steuerbar sind. Dazu sind die Druckleisten über Koppelstangen exzentrisch an Schneckenrädern angelenkt, die von antriebsmäßig verbundenen Schnecken um 180° zwischen einer der Schließstellung zugeordneten Decklage und einer der Öffnestellung zugeordneten Strecklage von Koppelstange und Schneckenrad vor und zurück drehbar sind. Die Schnecken können von Hand oder motorisch betätigt werden, wobei der Motorantrieb bei der Rotation der Klemmeinrichtung nicht mitbewegt wird. Auch ohne Antrieb der Schnecken sind die Schließ- und Öffnestellungen wegen des selbsthemmenden Schneckengetriebes und der genannten Totlagenstellungen von Koppelstange und Schneckenrad gesichert.

Nachteilig bei der Klemmeinrichtung aus DE 102 46 077 A1 ist, dass sich die Klemmkraft, mit der das Druckprodukt von den Klemmbacken eingespannt ist, nicht veränderbar einstellen lässt. Denn die Klemmkraft ergibt sich aus der Abfederung der am Druckprodukt anliegenden Klemmbacke gegen die in feste Position einwärts gesteuerte Druckleiste, wobei die Klemmkraft proportional zur Produktdicke ansteigt. Das Öffnen und Schließen der Klemmeinrichtung erfolgt nur in dessen Rotationsendstellungen, in denen die Schnecken mit dem Motorantrieb antriebsverbunden sind, sodass eine Veränderung der Öffnungsweite während der Rotation der Klemmeinrichtung nicht möglich ist.

Der Erfindung liegt die Aufgabe zugrunde, eine Vorrichtung zum Bewegen eines Buches, eines gebundenen oder aus Bogen und/oder Falzbogen lose zusammengetragenen Buchblocks oder Druckprodukts gemäß dem Oberbegriff des Patentanspruchs 1 zu schaffen, die ein schnelles und einwandfreies Transportieren des Druckprodukts ermöglicht und bei der sich der Abstand der Klemmbacken während der Leerbewegung definiert verändern lässt.

Diese Aufgabe wird erfindungsgemäß gelöst durch ein auf der bewegten Klemmeinrichtung angeordnetes, eine Drehbewegung in eine lineare Stellbewegung für die wenigstens eine parallelverschiebbare Klemmbacke umsetzendes Getriebe, durch einen steuerbaren, ortsfest angeordneten zweiten Antrieb, und durch eine permanente Antriebsverbindung zwischen dem zweiten Antrieb und dem genannten Umsetzungsgetriebe. Das Antriebsmittel zum Öffnen und Schließen der Klemmbacken befindet sich nicht auf dem bewegten System, wodurch eine besonders leichte Konstruktion der Klemmeinrichtung möglich wird, die sich hochdynamisch bewegen lässt. Pneumatische und elektrische Anschluss- und Signalleitungen für den zweiten Antrieb können fest verlegt werden. Mit dem permanent mit der Klemmeinrichtung verbundenen steuerbaren zweiten Antrieb kann die wenigstens eine Klemmbacke in definierte Offne- und Schließpositionen gesteuert werden und zwar auch während der Bewegung der Klemmeinrichtung. Es kann eine dem jeweiligen Druckprodukt angemessene, insbesondere produktschonende Haltekraft erzeugt werden, zum einwandfreien Transport der Druckprodukte.

Bevorzugte Weiterausgestaltungen der erfindungsgemäßen Vorrichtung bilden Gegenstand der abhängigen Ansprüche.

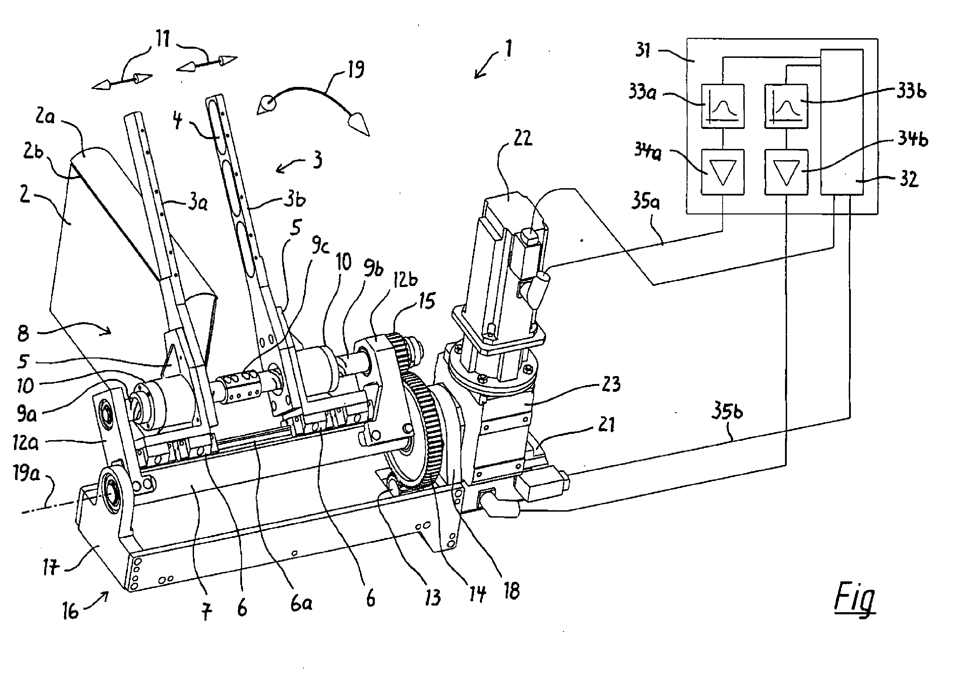

Die Merkmale der vorliegenden Erfindung werden in der folgenden Beschreibung einer bevorzugten Ausführungsform anhand der beigefügten Zeichnung erläutert. Die einzige Figur zeigt in perspektivischer Ansicht einen Schwenkgreifer zum gegriffenen Umsetzen eines Buches.

Der Schwenkgreifer 1 ist im Wesentlichen gebildet von einem um eine horizontale Rotationsachse 19 a vor und zurück schwenkbaren Klemmgreifer 3 als Klemmeinrichtung, mit einer linken und einer rechten Klemmbacke 3 a und 3 b, die durch zueinander gegenläufige Parallelverschiebungen über Mitte öffne- und schließbar sind. Die Öffne- und Schließbewegung 11 der Klemmbacken 3 a, b verläuft dabei parallel zur Rotationsachse 19 a.

Mit dem Schwenkgreifer 1 kann ein in einer ersten Position bereitgestelltes, beispielsweise auf seinem Vorderschnitt stehendes Buch 2 seitlich gegriffen und mit einer um 180° erfolgenden Schwenkbewegung 19 gewendet und in eine zur ersten Position versetzte, zweite Position überführt werden, wobei es sich bei der zweiten Position um eine Arbeitsposition einer nicht weiter dargestellten Bearbeitungseinrichtung handeln kann, in die das Buch 2 mit nach unten weisendem Rücken 2 a übergeben wird.

Die Klemmbacken 3 a, b weisen an ihrer Innenseite von Druckfedem beaufschlagte Polster 4 auf, die bei Annäherung der Klemmbacken 3 a, b an das Buch 2 einfedern und eine entsprechend der Einfederung definierte Klemmkraft darbieten.

Die Klemmbacken 3 a, b sind an Haltern 5 aufgenommen, die mittels Linearführungen 6 entlang einer auf einer Schwenkkonsole 7 befestigen Führungsschiene 6 a verschiebbar sind. Die Schwenkkonsole 7 ist in Lagern 17, 18 eines Gestellrahmens 16 drehgelagert und über ein Getriebe 23 mit einem Servomotor 22 als ersten Antrieb des Schwenkgreifers 1 zum rotativen Schwenken des Klemmgreifers 3 verbunden.

Die Stellbewegung für das Offnen und Schließen des Klemmgreifers 3 wird von einem Spindelgetriebe 8 erzeugt, bestehend aus einer linken und einer rechten, ein Links- bzw. ein Rechtsgewinde aufweisenden, mit einer Muffe 9 c miteinander antriebsverbundenen Gewindespindeln 9 a und 9 b und zugeordneten in den Haltern 5 der Klemmbacken 3 a, b aufgenommenen Spindelmuttern 10.

Die miteinander verbundenen Gewindespindeln 9 a, b sind in an der Schwenkkonsole 7 angeordneten Lagern 12 a, b drehgelagert, wobei die rechte Gewindespindel 9 b ein Zahnrad 15 aufweist, das mit einem auf der Schwenkkonsole 7 in der Schwenkachse 19 a frei drehend gelagerten Zahnrad 14 im Eingriff steht, welches wiederum in ein Ritzel 13 greift, das auf der Abtriebswelle eines erfindungsgemäß gestellfest angeordneten Servomotors 21 als zweiten Antrieb des Schwenkgreifers 1 sitzt. Durch dessen jeweilige Drehbewegung werden also die Klemmbacken 3 a, b im Sinne eines Öffnens und Schließens des Klemmgreifers 3 zueinander verschoben.

Da in der Schwenkbewegung 19 des Klemmgreifers 3 eine Relativbewegung der Gewindespindeln 9 a, b zum Abtrieb des Servomotors 21 stattfindet, wird durch die permanente Antriebsverbindung über die Zahnräder 13, 14, 15 eine Drehbewegung in den Gewindespindeln 9a, b induziert, die zum Offnen oder Schließen des Klemmgreifers 3 führt, ohne dass sich der eigentliche Antrieb 21 dreht. Durch entsprechende Betätigung des Servomotors 21 kann diese Verschiebung kompensiert werden.

Der Servomotor 21 ist dazu mit dem Servomotor 22 über eine Steuerung 31 steuerbar verbunden. Eine zentrale Steuerungseinheit 32 verarbeitet die über Resolverrückführungen 35 a, b eingehenden jeweiligen absoluten Drehpositionen der beiden Servomotore 21, 22, um in Verbindung mit den in den sogenannten elektronischen Kurvenscheiben 33 a, b hinterlegten Bewegungsvorgaben auf die jeweilige Motoransteuerung 34 a bzw. 34 b dahingehend einzuwirken, dass die vorgegebene Schwenkbewegung 19 des Schwenkgreifers 1 und der gegenseitige Abstand der Klemmbacken 3 a, b gemäß Vorgabe exakt eingehalten werden.

Die Vorgabe für den gegenseitigen Abstand der Klemmbacken 3 a, b kann dabei nicht nur darin bestehen, dass der Abstand beim Schwenken des Klemmgreifers 3 konstant bleibt, wie dies beim gegriffenen Transport zur Aufbringung einer konstanten Klemmkraft erforderlich ist, sondern es kann auch definiert sein, dass die Klemmbacken 3 a, b sich während der Leerbewegung weiter öffnen oder schließen, um beispielsweise den breiteren Buchrücken zu umfahren, anderen zu- bzw. wegfördernden Fördermitteln auszuweichen oder dem überführten bzw. dem nachfolgend zu überführenden Buch 2 eine seitliche Führung darzubieten. Selbstverständlich umfasst die Vorgabe auch die Stillstandspositionen des Klemmgreifers 3, in denen die Klemmbacken 3 a, b zur Übernahme bzw. Freigabe eines Buches 2 geschlossen bzw. geöffnet werden.

Die Vorgabe ist in einer parametrisierten, maßgeblich von der Buchdicke bestimmten Bewegungskurve festgelegt, die unter Berücksichtigung der bei der Schwenkbewegung 19 zu kompensierenden Relativbewegung in eine entsprechende elektronische Kurvenscheibe 33b übersetzt wurde. Während der gegriffenen Schwenkbewegung 19 kann eine Nachregelung des Servoantriebs 21 auch nach einem bestimmten Antriebsmoment erfolgen, wodurch eine vorgebbare konstant zu haltende Klemmkraft zwischen den Klemmbacken 3 a, b bzw. ihren Polstern 4 aufgebracht werden kann.

Die Erfindung ist nicht auf das beschriebene Ausführungsbeispiel beschränkt. Die Klemmeinrichtung kann auch linear bewegt sein, wobei die Antriebsverbindung über eine Zahnstange erfolgt, oder die Klemmeinrichtung kann umlaufend rotieren. Die Klemmbacken 3a, 3b können zusätzlich auch als Falzschienen ausgebildet sein, zum Erfassen der eingebrannten, gegenüber den Buchaußenseiten vertieften Falze 2 b eines Buches 2.

**Bezugszeichenliste**

| | | | |
|---|---|---|---|
| **1** | Schwenkgreifer | **13** | Ritzel |
| **2** | Buch | **14** | Zahnrad |
| **2a** | Buchrücken | **15** | Zahnrad |
| **2b** | Falz | **16** | Gestellrahmen |
| **3** | Klemmgreifer | **17** | Lager |
| **3a, b** | Linke und rechte Klemmbacke | **18** | Lager |
| **4** | Polster | **19** | Schwenkbewegung |
| **5** | Halter | **19a** | Schwenkachse |
| **6** | Linearführung | **21** | Servomotor |
| **6a** | Führungsschiene | **22** | Servomotor |
| **7** | Schwenkkonsole | **23** | Getriebe |
| **8** | Spindelgetriebe | **31** | Steuerung |
| **9a, b** | Linke und rechte Gewindespindel | **32** | Zentrale Steuerungseinheit |
| **9c** | Muffe | **33a, b** | Elektronische Kurvenscheibe |
| **10** | Spindelmutter | **34a, b** | Motoransteuerung |
| **11** | Öffne- und Schließbewegung | **35a, b** | Resolverrückführung |
| **12a, b** | Lager | | |

## Patentansprüche

1. Vorrichtung (1) zum Bewegen eines Buches (2) oder eines gebundenen oder aus Bogen und/oder Falzbogen lose zusammengetragenen Buchblocks
• mit einer von einem ersten Antrieb (22, 23) bewegbaren Klemmeinrichtung (3),
• bestehend aus zwei parallel zueinander angeordneten, das Druckprodukt (2) mit einer definierten Klemmkraft zwischen sich einspannenden Klemmbacken (3 a, b), wobei
• die Klemmeinrichtung (3) eine rotative Bewegung (19) um eine Rotationsachse (19 a) vollführt und
• zum Öffnen und Schließen der Klemmeinrichtung (3) der gegenseitige Abstand der Klemmbacken (3 a, b) durch Parallelverschiebung wenigstens einer Klemmbacke (3 a, b) veränderbar ist,
• mit einem auf der bewegten Klemmeinrichtung (3) angeordneten, eine Drehbewegung in eine lineare Stellbewegung für die wenigstens eine parallelverschiebbare Klemmbacke (3 a, b) umsetzenden Getriebe (8),
• einem steuerbaren, ortsfest angeordneten zweiten Antrieb (21), **gekennzeichnet**
• **durch** eine permanente Antriebsverbindung (13, 14, 15) zwischen dem zweiten Antrieb (21) und dem genannten Umsetzungsgetriebe (8),
• welche über die Rotationsachse (19a) der Klemmeinrichtung (3) geführt ist.

2. Vorrichtung nach Anspruch 1, **dadurch gekennzeichnet, dass** die rotative Bewegung (19) der Klemmeinrichtung (3) um einen definierten Winkel vor und zurück schwenkend erfolgt.

3. Vorrichtung nach einem der Ansprüche 1 oder 2, **dadurch gekennzeichnet, dass** die lineare Stellbewegung bzw. die Öffne- und Schließbewegung (11) der wenigstens einen Klemmbacke (3 a, 3 b) parallel zur Rotationsachse (19 a) der Klemmeinrichtung (3) erfolgt.

4. Vorrichtung nach einem der Ansprüche 1 bis 3, **dadurch gekennzeichnet, dass** der zweite Antrieb (21) als drehwinkelgesteuerter Elektromotor (21) ausgebildet ist.

5. Vorrichtung nach einem der Ansprüche 1 bis 4, **dadurch gekennzeichnet, dass** der zweite Antrieb (21) für die Betätigung der wenigstens einen Klemmbacke (3 a, b) mit dem ersten Antrieb (22) für die Bewegung der Klemmeinrichtung (3) über eine Steuervorrichtung (31) steuerbar verbunden ist.

6. Vorrichtung nach einem der Ansprüche 1 bis 5, **dadurch gekennzeichnet, dass** eine durch die Bewegung der Klemmeinrichtung (3) erzeugte Verschiebung der wenigstens einen Klemmbacke (3 a, b) durch den zweiten Antrieb (21) entsprechend kompensiert wird.

7. Vorrichtung nach einem der Ansprüche 1 bis 6, **dadurch gekennzeichnet, dass** während der Bewegung der Klemmeinrichtung (3) der gegenseitige Abstand der Klemmbacken (3 a, b) nach der Position der Klemmeinrichtung (3) veränderbar gesteuert ist.

8. Vorrichtung nach einem der Ansprüche 1 bis 7, **dadurch gekennzeichnet, dass** der gegenseitige Abstand der Klemmbacken (3 a, b) gemäß einer von wenigstens einem Parameter bestimmten Bewegungskurve veränderbar gesteuert ist.

9. Vorrichtung nach Anspruch 8, **dadurch gekennzeichnet, dass** der Verlauf der Bewegungskurve von der Dicke des Druckprodukts (2) bestimmt ist.

10. Vorrichtung nach einem der Ansprüche 1 bis 9, **dadurch gekennzeichnet, dass** eine definierte Klemmkraft zwischen den Klemmbacken (3 a, b) von dem zweiten Antrieb (21) aufbringbar ist.

11. Vorrichtung nach einem der Ansprüche 1 bis 10, **dadurch gekennzeichnet, dass** der gegenseitige Abstand der Klemmbacken (3 a, b) nach einer vorgebbaren Klemmkraft veränderbar gesteuert ist.

12. Vorrichtung nach einem der Ansprüche 1 bis 11, **dadurch gekennzeichnet, dass** das genannte Umsetzungsgetriebe (8) als Spindelgetriebe (8) mit wenigstens einer Gewindespindel (9 a, b) und zugeordneter Spindelmutter (10) gebildet ist.

13. Vorrichtung nach einem der Ansprüche 1 bis 12, **dadurch gekennzeichnet, dass** das Umsetzungsgetriebe (8) Antriebsmittel (9a, 9b) aufweist, welche jeweils mit einer der Klemmbacken (3a, 3b) der Klemmeinrichtung (3) antriebsverbunden sind und gestaltet sind, diese zusammenwirkenden Klemmbacken (3a, 3b) derart gegenläufig anzutreiben, dass die lineare Stellbewegung bzw. Öffnungs- und Schließbewegung dieser Klemmbacken (3a, 3b) symmetrisch zu der Mitte des Buchs (2) erfolgt.

## Claims

1. A device (1) for moving a book (2), a bound book block or a book block that is loosely gathered of sheets and/or folded sections,
• with a clamping device (3) that can be moved by a first drive (22, 23) and
• consists of two clamping jaws (3 a, b) that are arranged parallel to one another and clamp the printed product (2) between one another with a defined clamping force, wherein
• the clamping device (3) carries out a rotative movement (19) about an axis of rotation (19 a) and
• the mutual spacing between the clamping jaws (3 a, b) can be varied in the form of a parallel displacement of at least one clamping jaw (3 a, b) in order to open and close the clamping device (3),
• with a gear mechanism (8) that is arranged on the moving clamping device (3) and converts a rotative movement into a linear adjusting movement for the at least one clamping jaw (3 a, b) that can be displaced in a parallel fashion, and
• with a controllable second drive (21) that is arranged stationarily,
**characterized**
• **in** a permanent driving connection (13, 14, 15) between the second drive (21) and the aforementioned conversion gear mechanism (8),
• wherein said driving connection extends along the axis of rotation (19 a) of the clamping device (3).

2. The device according to claim 1, **characterized in that** the rotative movement (19) of the clamping device (3) is realized in the form of a back and forth pivoting movement by a defined angle.

3. The device according to one of claims 1 or 2, **characterized in that** the linear adjusting movement or opening and closing movement (11) of the at least one clamping jaw (3 a, 3 b) takes place parallel to the axis of rotation (19 a) of the clamping device (3).

4. The device according to one of claims 1 to 3, **characterized in that** the second drive (21) is realized in the form of an electric motor (21) that is controlled in dependence on the angle of rotation.

5. The device according to one of claims 1 to 4, **characterized in that** the second drive (21) for actuating the at least one clamping jaw (3 a, b) is connected in a controllable fashion to the first drive (22) for moving the clamping device (3) by means of a control device (31).

6. The device according to one of claims 1 to 5, **characterized in that** a displacement of the at least one clamping jaw (3 a, b) caused by the movement of the clamping device (3) is compensated accordingly by the second drive (21).

7. The device according to one of claims 1 to 6, **characterized in that** the mutual spacing between the clamping jaws (3 a, b) is variably controlled in accordance with the position of the clamping device (3) during the movement of the clamping device (3).

8. The device according to one of claims 1 to 7, **characterized in that** the mutual spacing between the clamping jaws (3 a, b) is variably controlled in accordance with a movement curve that is defined by at least one parameter.

9. The device according to claim 8, **characterized in that** the course of the movement curve is defined by the thickness of the printed product (2).

10. The device according to one of claims 1 to 9, **characterized in that** a defined clamping force can be generated between the clamping jaws (3 a, b) by the second drive (21).

11. The device according to one of claims 1 to 10, **characterized in that** the mutual spacing between the clamping jaws (3 a, b) is variably controlled in accordance with a predetermined clamping force.

12. The device according to one of claims 1 to 11, **characterized in that** the aforementioned conversion gear mechanism (8) is realized in the form of a spindle gear mechanism (8) with that at least one threaded spindle (9 a, b) and an assigned spindle nut (10).

13. The device according to one of claims 1 to 12, **characterized in that** the conversion gear mechanism (8) features driving means (9a, 9b) that are respectively connected to and drive one of the clamping jaws (3a, 3b) of the clamping device (3) and are designed for driving these cooperating clamping jaws (3a, 3b) in opposite directions such that the linear adjusting movement or opening and closing movement of these clamping jaws (3a, 3b) takes place symmetrically referred to the centre of the book (2).

## Revendications

1. Dispositif (1) destiné à déplacer un livre (2) ou un bloc de livre relié ou en feuilles et/ou feuilles pliées rassemblées de manière lâche
• avec un système de serrage (3) déplaçable par un premier entraînement (22, 23),
• constitué de deux mâchoires de serrage (3 a, b) placées à la parallèle l'une de l'autre, enserrant entre elles le produit d'impression (2) avec une force de serrage définie,
• le système de serrage (3) réalisant un déplacement rotatoire (19) autour d'un axe de rotation (19 a),
• pour ouvrir et pour fermer le système de serrage(3), l'écart mutuel entre les mâchoires de serrage (3 a, b) étant variable par un déplacement à la parallèle d'au moins une mâchoire de serrage (3 a, b),
• avec un engrenage (8), placé sur le système de serrage (3) déplacé, convertissant un déplacement rotatoire en un déplacement de réglage linéaire pour l'au moins une mâchoire de serrage (3 a, b) déplaçable à la parallèle,
• un deuxième entraînement (21) pouvant être commandé, placé de manière stationnaire,
**caractérisé**
• **par** une liaison d'entraînement (13, 14, 15) permanente entre le deuxième entraînement (21) et l'engrenage à crémaillère (8) cité,
• lequel est guidé par sur l'axe de rotation (19 a) du système de serrage.

2. Dispositif selon la revendication 1, **caractérisé en ce que** le déplacement rotatoire (19) du système de serrage (33) s'effectue en pivotant en aller et retour autour d'un angle défini.

3. Dispositif selon l'une quelconque des revendications 1 ou 2, **caractérisé en ce que** le déplacement de réglage linéaire ou le déplacement (11) en ouverture et en fermeture de l'au moins une mâchoire de serrage (3 a, 3 b) s'effectue à la parallèle de l'axe de rotation (19 a) du système de serrage (3).

4. Dispositif selon l'une quelconque des revendications 1 à 3, **caractérisé en ce que** le deuxième entraînement (21) est conçu sous la forme d'un moteur électrique (21) à commande d'angle de rotation.

5. Dispositif selon l'une quelconque des revendications 1 à 4, **caractérisé en ce que** pour l'actionnement de l'au moins une mâchoire de serrage (3 a, b), le deuxième entraînement (21) est relié de manière commandée avec le premier entraînement (22) par l'intermédiaire d'un dispositif de commande (31) pour déplacer le système de serrage (3).

6. Dispositif selon l'une quelconque des revendications 1 à 5, **caractérisé en ce qu'**un décalage généré par le déplacement du système de serrage (3) de l'au moins une mâchoire de serrage (3 a, b) est compensé en conséquence par le deuxième entraînement (21).

7. Dispositif selon l'une quelconque des revendications 1 à 6, **caractérisé en ce que** notamment pendant le déplacement du système de serrage (3), l'écart mutuel entre les mâchoires de serrage (3 a, b) est commandé de manière variable en fonction de la position du système de serrage (3).

8. Dispositif selon l'une quelconque des revendications 1 à 7, **caractérisé en ce que** l'écart mutuel entre les mâchoires de serrage (3 a, b) est commandé de manière variable selon une courbe de déplacement déterminée par au moins un paramètre.

9. Dispositif selon la revendication 8, **caractérisé en ce que** le trajet de la courbe de déplacement est déterminé par l'épaisseur du produit d'impression (2).

10. Dispositif selon l'une quelconque des revendications 1 à 9, **caractérisé en ce qu'**une force de serrage définie est susceptible d'être appliquée entre les mâchoires de serrage (3 a, b) par le deuxième entraînement (21).

11. Dispositif selon l'une quelconque des revendications 1 à 10, **caractérisé en ce que** l'écart mutuel entre les mâchoires de serrage (3 a, b) est commandé de manière variable selon une force de serrage prédéfinissable.

12. Dispositif selon l'une quelconque des revendications 1 à 11, **caractérisé en ce que** l'engrenage à crémaillère (8) est conçu sous la forme d'une transmission à broche (8) avec au moins une broche filetée (9 a, b) et un écrou de broche (10) associé.

13. Dispositif selon l'une quelconque des revendications 1 à 12, **caractérisé en ce que** l'engrenage à crémaillère (8) comporte des moyens d'entraînement (9a, 9b) qui sont chacun reliés en entraînement avec l'une des mâchoires de serrage (3a, 3b) du système de serrage et qui sont conçus pour entraîner à contresens lesdites mâchoires de serrage (3a, 3b) coopérantes de telle sorte que le déplacement de réglage linéaire ou le déplacement en ouverture et fermeture desdites mâchoires de serrage (3a, 3b) s'effectue de manière symétrique au centre du livre (2).
